# FASCICULE DE BREVET EUROPEEN

(11) **EP 3 398 885 B1**
(45) Date de publication et mention de la délivrance du brevet: **04.09.2019**
(21) Numéro de dépôt: 18166537.3
(22) Date de dépôt: 10.04.2018
(51) Int. Cl.: B65G 17/00

(54) **EQUIPEMENT DE TRI D'OBJETS POUR PLATEFORME LOGISTIQUE**
AUSRÜSTUNG ZUM SORTIEREN VON OBJEKTEN FÜR EINE LOGISTIK-PLATTFORM
OBJECT SORTING SYSTEM FOR LOGISTICS PLATFORM

(30) Priorité: 04.05.2017 FR 1753924
(43) Date de publication de la demande: 07.11.2018
(73) Titulaire: Solystic, 92220 Bagneux (FR)
(72) Inventeur: RIEU, Jean, 07800 SAINT GEORGES LES BAINS (FR)
(74) Mandataire: Prugneau, Philippe

(56) Documents cités:
- EP-A1- 0 626 324
- FR-A1- 2 881 409
- US-A- 3 580 379
- US-A- 3 791 518

## Description

### Domaine technique

Le domaine de l'invention est celui du tri d'objets effectué en plateformes logistiques.

L'invention concerne plus particulièrement un équipement de tri d'objets comprenant un convoyeur à plat de type chaine à maillons porteurs conçus pour convoyer les objets vers des sorties de tri selon une certaine direction de convoyage.

### Technique antérieure

Egalement appelés « dividers », les convoyeurs à plat de type chaine à maillons porteurs sont utilisés dans les plateformes logistiques pour trier tous types d'objets tels que des paquets, des colis, des bouteilles, etc.

Ces convoyeurs comprennent généralement un convoyeur principal avec des sorties de tri réparties en aval dans la direction de convoyage et un séparateur permettant de dévier les objets vers les sorties de tri appropriées.

Certains de ces convoyeurs, comme celui décrit dans le document US 3,580,379, qui divulgue un équipement de tri d'objets selon le préambule de la revendication 1, sont équipés d'une chaine à maillons coulissants sur lequel sont convoyés les objets.

Les maillons jouent ici le rôle du séparateur en coulissant transversalement à la direction de convoyage pour orienter et diriger les paquets vers des convoyeurs secondaires débouchant sur des sorties de tri appropriées.

Si ce type de convoyeur est très apprécié pour sa fiabilité dans le convoyage des objets, il est en revanche peu adapté pour le tri d'objets à haut débit et à forte densité.

En effet, plus le nombre d'objets à trier augmente et plus le nombre de convoyeurs secondaires et de sorties de tri doit être important.

Il en découle que l'amplitude de coulissement des maillons est augmentée pour garantir l'approvisionnement en objets de toutes les sorties de tri.

La taille des convoyeurs devient alors trop importante pour une utilisation en plateforme logistique.

D'autres convoyeurs du type chaine à maillons coulissants sont décrits dans les documents US3791518 et FR2881409.

### Exposé de l'invention

Le but de l'invention est donc de remédier aux problèmes précités.

A cet effet, l'invention a pour objet un équipement de tri d'objets comprenant un convoyeur à plat de type chaine à plateaux porteurs conçus pour convoyer les objets vers des sorties de tri selon une certaine direction de convoyage, lesdits plateaux porteurs étant montés coulissants sur la chaine transversalement par rapport à ladite direction de convoyage entre une position déployée et une position rétractée, caractérisé en ce que les sorties de tri sont disposées sous les plateaux porteurs de la chaine les unes après les autres dans ladite direction de convoyage lorsque les plateaux porteurs sont en position déployée, et lesdits plateaux porteurs sont agencés pour se dérober sous les objets lorsqu'ils sont coulissés en position rétractée afin de faire chuter les objets dans les sorties de tri, en ce qu'il comprend une unité de contrôle/commande conçue pour piloter le coulissement des plateaux porteurs en fonction des sorties de tri dans lesquelles les objets doivent être triés, et en ce que le convoyeur comprend une butée de type « peigne » sur la chaine conçue pour autoriser le coulissement des plateaux porteurs et empêcher le déplacement transversal des objets sur les plateaux au-delà de la butée.

L'idée à la base de l'invention est donc de disposer les sorties de tri sous les maillons de la chaine et de faire coulisser les maillons transversalement à la direction de convoyage, à la manière d'une « trappe coulissante », pour créer un vide au-dessus des sorties de tri et faire chuter les objets par gravité.

L'idée consiste également à se servir d'une unité de contrôle/commande pour piloter sélectivement le déplacement d'un ou plusieurs maillons.

L'intérêt d'une évacuation rapide et sélective des objets dans les sorties de tri est d'augmenter le nombre d'objets à trier et la vitesse de convoyage.

De plus, en agençant les sorties de tri sous les maillons l'encombrement du convoyeur s'en trouve réduit et les convoyeurs secondaires habituellement utilisés pour convoyer les objets vers les sorties de tri supprimés.

L'équipement de tri selon l'invention peut également présenter les particularités suivantes :
- le convoyeur comprend pour chaque sortie de tri un système d'aiguillage conçu pour guider le coulissement d'une pluralité de plateaux porteurs disposés au-dessus de la sortie de tri ;
- chaque système d'aiguillage provoque le coulissement simultané des plateaux porteurs ;
- chaque système d'aiguillage provoque le coulissement progressif des plateaux porteurs dans la direction de convoyage ;
- l'équipement de tri comprend un autre convoyeur à plat de type chaine à plateaux porteurs, les deux convoyeurs étant disposés symétriquement côte-à-côte dans la direction de convoyage et agencés pour convoyer chaque objet sur les plateaux desdits deux convoyeurs, et en ce que l'unité de contrôle/commande est conçue pour piloter le coulissement des plateaux dudit autre convoyeur en fonction des sorties de tri dans lesquelles les objets doivent être triés de sorte que les plateaux se faisant face des deux convoyeurs sont coulissés simultanément.

### Présentation sommaire des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
- la figure 1 est une représentation schématique en perspective vue de dessus d'un convoyeur à plat de type chaine à maillons coulissants selon l'invention ;
- la figure 2 est une représentation schématique en perspective vue de dessous d'un convoyeur à plat de type chaine à maillons coulissants selon l'invention ;
- la figure 3 est une représentation schématique en perspective vue de dessous d'un convoyeur à plat de type chaine à maillons coulissants selon l'invention avec son système d'aiguillage ;
- la figure 4 est une représentation schématique en perspective de l'équipement de tri selon l'invention avec deux convoyeur à plat de type chaine à maillons coulissants et des sorties de tri ;
- les figures 5 et 6 représentent schématiquement en perspective une portion de l'équipement de tri de la figure 4 à deux intervalles de temps successifs pour l'évacuation d'un objet.

### Description du mode de réalisation

L'équipement de tri 1 selon l'invention est adapté pour équiper des plateformes de tri logistiques ou des centres de tri postaux pour le tri d'objets 2 de type paquet, colis postal, etc.

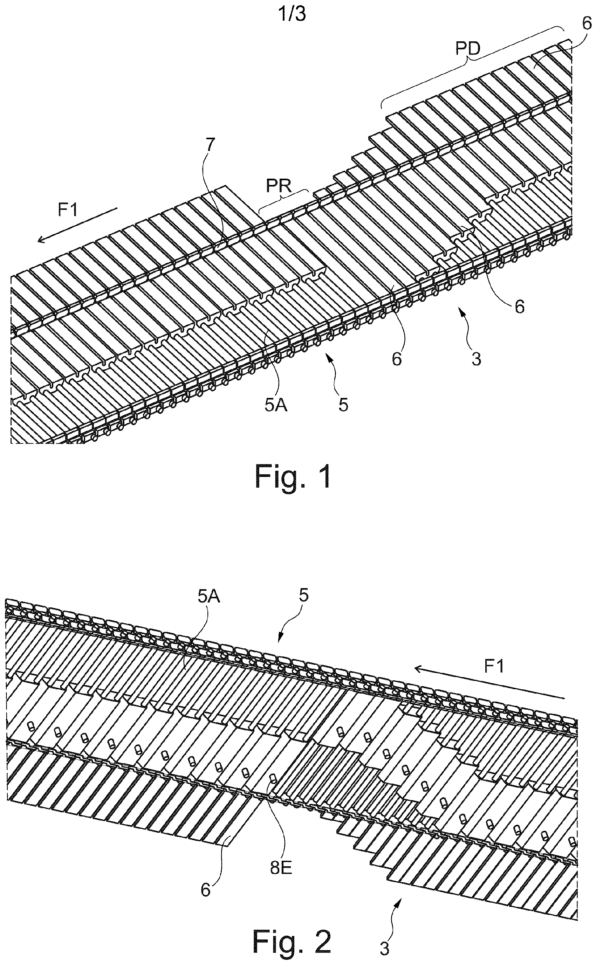

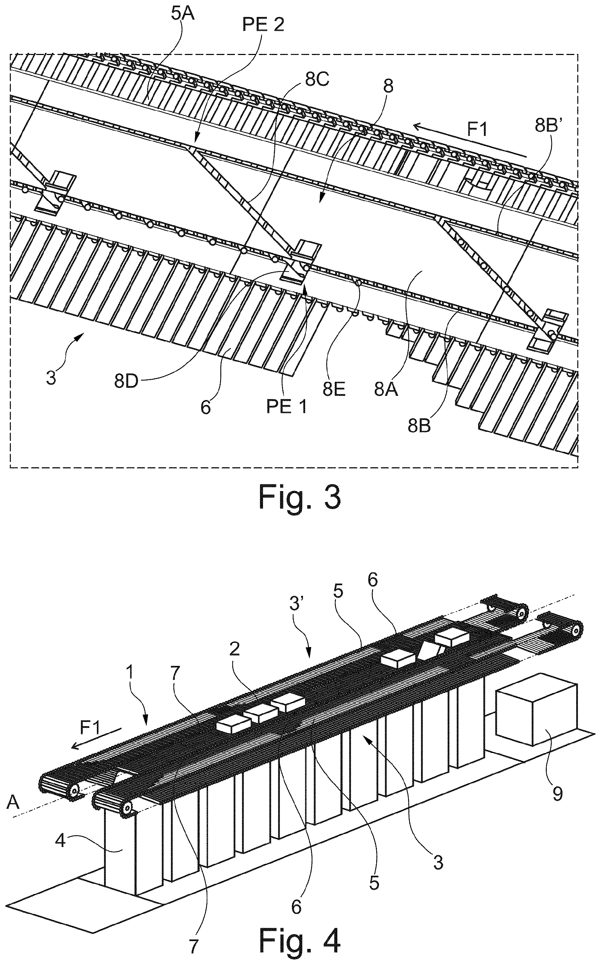

L'équipement de tri 1 selon l'invention comprend ici un convoyeur 3 à plat de type chaine 5 à maillons porteurs 6 tel que représenté sur la figure 1 qui s'étend selon une certaine direction de convoyage indiquée par la flèche F1 au-dessus d'une pluralité de sorties de tri 4 visibles sur les figures 4 à 6.

La chaine 5 comprend une pluralité de barres fixes 5A chacune s'étendant horizontalement et transversalement à la direction de convoyage F1.

Les maillons 6 quant eux se présentent sous la forme de plateaux porteurs d'objets 2 montés coulissant sur une ou plusieurs barres fixes 5A transversalement à la direction de convoyage F1.

Le convoyeur 3 comprend également une pluralité de butées 7 fixées aux extrémités des barres fixes 5A d'un côté de la chaine.

Les butées sont ici conçues pour autoriser le coulissement des maillons 6 et empêcher le déplacement des objets 2 au-delà de la butée 7 transversalement à la direction de convoyage F1, à la manière d'un « peigne ».

Le blocage des objets par les butées accélère ainsi l'effet « trappe » coulissante des maillons.

Les maillons 6 sont donc mobiles entre une position déployée PD dans laquelle ils s'étendent au-delà de la butée 7 au-dessus des sorties de tri 4 de manière à convoyer les objets 2 selon la direction de convoyage F1, et une position rétractée PR dans laquelle les maillons 6 ne s'étendent pas au-delà de la butée 7 pour faire chuter les objets 2 dans les sorties de tri 4, comme représenté sur la figure 1.

Le coulissement des maillons 5 au-dessus des sorties de tri 4 s'apparente donc ici à un déploiement télescopique.

Dans la position déployée PD seuls les maillons 6 se trouvent au-dessus des sorties de tri 4, comme visible sur les figures 4 à 6, de sorte que l'ouverture des sorties de tri 4 correspond à l'amplitude de déploiement des maillons 6 au-delà de la butée 7.

Dans la position rétractée PR, on comprend que les maillons 6 sont rétractés sur les barres fixes 5A pour ne pas dépasser des butées 7. Cette position permet de créer un vide au-dessus des sorties de tri 4 pour faire chuter les objets 2 par gravité.

Les butées 7 s'étendent le long du convoyeur 3 dans la direction de convoyage F1 de sorte à empêcher tout franchissement des objets 2 lors d'un déplacement de la position déployée PD vers la position rétractée PR.

Le convoyeur 3 comprend en outre un système d'aiguillage 8, visible sur la figure 3, conçu pour guider le coulissement d'une pluralité de maillons au-dessus de chaque sortie de tri 4.

Le système d'aiguillage 8 permet de faire coulisser les maillons simultanément ou progressivement les uns après les autres.

Chaque système d'aiguillage 8 comprend ici un support 8A disposé sous les barres 5A fixes dans lequel s'étendent deux premières gorges de guidage 8B,8B' dans la direction de convoyage F1 et une seconde gorge de guidage 8C oblique dans la direction de convoyage F1 qui relie les deux premières gorges de guidage 8B,8B'au niveau de deux points d'embranchement PE1,PE2, comme représenté sur la figure 3.

Un aiguilleur 8D est également disposé à l'embranchement PE1 le plus en amont par rapport à la direction de convoyage F1.

Chaque maillon 6 coulissant comprend également un ergot 8E, visibles sur les figures 2 et 3, sur sa partie inférieur conçu pour se déplacer dans les première et seconde gorges de guidage 8B,8B'.

Ainsi, lors du déplacement des maillons 6 dans la direction de convoyage F1, les ergots se déplacent sélectivement dans les gorges de guidage 8B,8B' et 8C en fonction de la position ON ou OFF de l'aiguilleur 8D.

La position ON de l'aiguilleur 8D permet à l'ergot 8E de se déplacer dans la direction de convoyage F1 en ligne droite vers le système d'aiguillage 8 de la prochaine sortie de tri 4. Les maillons 6 sont alors maintenus en position déployée pour convoyer un objet 2 porté vers la sortie de tri 4 suivante dans la direction de convoyage F1.

La position OFF quant à elle permet de guider l'ergot 8E dans la gorge de guidage 8C oblique qui débouche sur l'autre première gorge de guidage 8B' de sorte à faire coulisser les maillons 6 et faire tomber l'objet 2 dans la sortie de tri 4 appropriée.

L'équipement de tri 1 comprend en outre une unité de contrôle/commande 9, représentée sur la figure 4, conçue pour piloter l'aiguilleur 8E en position ON ou OFF.

L'unité de contrôle/commande 9 utilise pour cela des données d'indications de tri stockés en mémoire telles que la liste des sorties de tri 4 dans lesquelles les objets 2 doivent être triés et la taille des objets 2 (largeur, longueur et épaisseur).

L'unité 9 est ainsi conçue pour commander le déplacement d'un ou plusieurs maillons sélectivement pour faire chuter un objet 2 dans la sortie de tri 4 appropriée.

Dans une variante de réalisation de l'invention, l'équipement de tri 1 selon l'invention comprend un autre convoyeur 3' à plat de type chaine à maillons porteurs identique au convoyeur 3. Les deux convoyeurs 3 et 3' sont alors disposés symétriquement par rapport à l'axe A et côte-à-côte dans la direction de convoyage F1.

Les objets convoyés sont ainsi en porte-à-faux sur les maillons des deux convoyeurs au-dessus des sorties de tri 4.

L'unité de contrôle/commande 9 est donc ici conçue pour commander le déplacement des maillons de l'autre convoyeur 3' en fonction des sorties de tri 4 dans lesquelles les objets 2 doivent être triés.

Ainsi, l'unité 9 pilote ici les aiguilleurs 8E des deux convoyeurs 3 et 3' en position ON ou OFF de sorte que les maillons 6 des deux convoyeurs se faisant face sont coulissés simultanément.

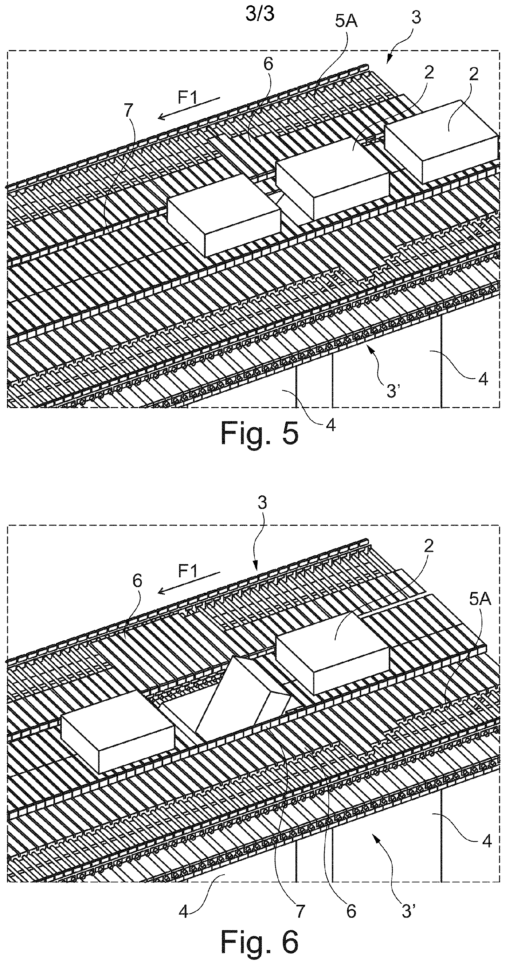

Sur les figures 5 et 6, trois objets 2 sont convoyés selon la direction de convoyage F1 sur les deux convoyeurs 3,3'.

Sur la figure 5, à un instant T, une pluralité de maillons 6 commencent à être coulissés transversalement à la direction de convoyage F1 afin d'anticiper la chute de l'objet 2 situé entre les deux autres dans la sortie de tri 4 appropriée qui se situe plus en aval des convoyeurs 3,3'.

Sur la figure 6, à un instant T+1 les maillons 6 sont totalement coulissés pour faire chuter l'objet 2 dans la sortie de tri 4 appropriée.

Les autres objets 2 seront convoyés plus loin sur le convoyeur jusqu'à ce que l'unité 9 décide de les évacuer dans les sorties de tri 4 appropriées.

Grâce aux deux convoyeurs 3, 3', l'amplitude de déploiement des maillons 6 est réduite ce qui augmente la vitesse d'évacuation des objets 2 dans les sorties de tri 4.

Il va de soi que la présente invention ne saurait être limitée au mode de réalisation exposé plus haut, susceptible de subir des modifications sans pour autant sortir de l'étendue de l'invention, qui est définie par les revendications en annexe.

## Revendications

1. Equipement de tri (1) d'objets comprenant un convoyeur (3) à plat de type chaine (5) à plateaux porteurs (6) conçus pour convoyer les objets (2) vers des sorties de tri (4) selon une certaine direction de convoyage (F1), lesdits plateaux porteurs (6) étant montés coulissants sur la chaine (5) transversalement par rapport à ladite direction de convoyage entre une position déployée (PD) et une position retractée (PR), et une unité de contrôle/commande (9) conçue pour piloter le coulissement des plateaux porteurs (6) en fonction des sorties de tri (4) dans lesquelles les objets (2) doivent être triés, **caractérisé en ce que** les sorties de tri (4) sont disposées sous les plateaux porteurs (6) de la chaine (5) les unes après les autres dans ladite direction de convoyage (F1) lorsque les plateaux porteurs (6) sont en position déployée (PD), et
lesdits plateaux porteurs (6) sont agencés pour se dérober sous les objets (2) lorsqu'ils sont coulissés en position rétractée (PR) afin de faire chuter les objets dans les sorties de tri (4), **en ce que** le convoyeur (3) comprend une butée (7) de type « peigne » sur la chaine conçue pour autoriser le coulissement des plateaux porteurs et empêcher le déplacement transversal des objets (2) sur les plateaux porteurs (6) au-delà de la butée (7).

2. Equipement de tri (1) selon l'une quelconque des revendications précédentes, **caractérisé en ce que** le convoyeur (3) comprend pour chaque sortie de tri (4) un système d'aiguillage (8) conçu pour guider le coulissement d'une pluralité de plateaux porteurs (6) disposés au-dessus de la sortie de tri (4).

3. Equipement de tri (1) selon la revendication 2, **caractérisé en ce que** chaque système d'aiguillage (8) provoque le coulissement simultané des plateaux porteurs (6).

4. Equipement de tri (1) selon la revendication 2, **caractérisé en ce que** chaque système d'aiguillage (8) provoque le coulissement progressif des plateaux porteurs (6) dans la direction de convoyage (F1).

5. Equipement de tri (1) selon l'une quelconque des revendications précédentes, **caractérisé en ce qu'**il comprend un autre convoyeur (3') à plat de type chaine (5) à plateaux porteurs (6), les deux convoyeurs (3,3') étant disposés symétriquement côte-à-côte dans la direction de convoyage (F1) et agencés pour convoyer chaque objet (2) sur les plateaux porteurs (6) desdits deux convoyeurs (3,3'), et **en ce que** l'unité de contrôle/commande (9) est conçue pour piloter le coulissement des plateaux porteurs (6) dudit autre convoyeur (3') en fonction des sorties de tri (4) dans lesquelles les objets (2) doivent être triés de sorte que les plateaux porteurs (6) se faisant face des deux convoyeurs (3,3') sont coulissés simultanément.

## Patentansprüche

1. Sortiereinrichtung (1) für Gegenstände, umfassend einen flachen Förderer (3) der Bauart Kette (5) von Trägerplatten (6), die dazu geschaffen sind, die Gegenstände (2) zu Sortierausgängen (4) gemäß einer bestimmten Förderrichtung (F1) zu fördern, wobei die Trägerplatten (6) zwischen einer vorgeschobenen Position (PD) und einer zurückgezogenen Position (PR) auf der Kette (5) quer in Bezug auf die Förderrichtung gleitend montiert sind, und eine Regel-/Steuereinheit (9), die geschaffen ist zum Steuern des Gleitens der Trägerplatten (6) in Funktion der Sortierausgänge (4), in welche die Gegenstände (2) sortiert werden sollen,
**dadurch gekennzeichnet,**
**dass** die Sortierausgänge (4) der eine hinter dem anderen in der Förderrichtung (F1) unter den Trägerplatten (6) der Kette (5) angeordnet sind, wenn die Trägerplatten (6) in vorgeschobener Position (PD) sind, und die Trägerplatten (6) ausgebildet sind, um sich unter den Gegenständen (2) zu entziehen, wenn sie in die zurückgezogene Position (PR) gleiten, um die Gegenstände in die Sortierausgänge (4) fallen zu lassen, und
**dass** der Förderer (3) einen Anschlag (7) der Bauart "Kamm" auf der Kette umfasst, der geschaffen ist, um das Gleiten der Trägerplatten zuzulassen und die Querverlagerung der Gegenstände (2) auf den Trägerplatten (6) jenseits des Anschlags (7) zu verhindern.

2. Sortiereinrichtung (1) nach einem der vorhergehenden Ansprüche, **dadurch gekennzeichnet, dass** der Förderer (3) für jeden Sortierausgang (4) ein Weichensystem (8) umfasst, das geschaffen ist zum Führen des Gleitens einer Mehrzahl von Trägerplatten (6), die oberhalb der Sortierausgänge (4) angeordnet sind.

3. Sortiereinrichtung (1) nach Anspruch 2, **dadurch gekennzeichnet, dass** jedes Weichensystem (8) das gleichzeitige Gleiten der Trägerplatten (6) bewirkt.

4. Sortiereinrichtung (1) nach Anspruch 2, **dadurch gekennzeichnet, dass** jedes Weichensystem (8) das in die Förderrichtung (F1) fortschreitende Gleiten der Trägerplatten (6) bewirkt.

5. Sortiereinrichtung (1) nach einem der vorhergehenden Ansprüche, **dadurch gekennzeichnet, dass** es einen weiteren flachen Förderer (3') der Bauart Kette (5) von Trägerplatten (6) umfasst, wobei die zwei Förderer (3, 3') symmetrisch Seite an Seite in der Förderrichtung (F1) angeordnet sind und ausgebildet sind zum Fördern jedes Gegenstands (2) auf den Trägerplatten (6) der zwei Förderer (3, 3'), und dass die Regel-/Steuereinheit (9) ausgebildet ist zum Steuern des Gleitens der Trägerplatten (6) des weiteren Förderers (3') in Funktion der Sortierausgänge (4), in die die Gegenstände (2) derart sortiert werden sollen, dass die sich gegenüberstehenden Trägerplatten (6) der beiden Förderer (3, 3') gleichzeitig gleiten.

## Claims

1. Article sorting equipment (1) comprising a flat conveyor (3) of the chain type (5) having carrier slats (6) designed for conveying articles (2) towards sorting outlets (4) in a certain conveying direction (F1), said carrier slats (6) being mounted to slide on the chain (5) transversely relative to said conveying direction between a deployed position (PD) and a retracted position (PR), and a monitoring and control unit (9) designed to cause the carrier slats (6) to slide as a function of the sorting outlets (4) into which the articles (2) are to be sorted, said article sorting equipment being **characterized in that** the sorting outlets (4) are disposed under the carrier slats (6) of the chain (5), one after another in said conveying direction (F1) when the carrier slats (6) are in the deployed position (PD), and said carrier slats (6) are arranged to come out from under the articles (2) when they are slid into the retracted position (PR) so as to cause the articles to fall into the sorting outlets (4), and **in that** the conveyor (3) further comprises an abutment (7) of the "comb" type on the chain that is designed to allow the carrier slats to slide and to prevent the transverse movement of the articles (2) on the carrier slats (6) beyond the abutment (7).

2. Sorting equipment (1) according to any preceding claim, **characterized in that**, for each sorting outlet (4), the conveyor (3) further comprises a switch system (8) designed to guide the sliding of a plurality of carrier slats (6) disposed over the sorting outlet (4).

3. Sorting equipment (1) according to claim 2, **characterized in that** each switch system (8) causes the carrier slats (6) to slide simultaneously.

4. Sorting equipment (1) according to claim 2, **characterized in that** each switch system (8) causes the carrier slats (6) to slide progressively along the conveying direction (F1).

5. Sorting equipment (1) according to any preceding claims, **characterized in that** it further comprises another flat conveyor (3') of the chain type (5) having carrier slats (6), the two conveyors (3, 3') being disposed symmetrically side-by-side in the conveying direction (F1) and being arranged to convey each article (2) on the carrier slats (6) of said two conveyors (3, 3'), and **in that** the monitoring and control unit (9) is designed to cause the carrier slats (6) of said other conveyor (3') to slide as a function of the sorting outlets (4) into which the articles (2) are to be sorted so that the mutually facing carrier slats (6) of the two conveyors (3, 3') are slid simultaneously.
